Europäisches Patentamt

European Patent Office

Office européen des brevets

(19)

(11) Veröffentlichungsnummer: **0 012 369**
**B1**

# (12) EUROPÄISCHE PATENTSCHRIFT

(45) Veröffentlichungstag der Patentschrift:
06.01.82

(21) Anmeldenummer: 79104959.6

(22) Anmeldetag: 06.12.79

(51) Int. Cl.³: **C 09 B 67/00, C 09 B 5/48**

(54) Verfahren zur Herstellung von lasierenden Pigmentformen des Indanthrons und des chlorierten Indanthrons.

(30) Priorität: 15.12.78 DE 2854190

(43) Veröffentlichungstag der Anmeldung:
25.06.80 Patentblatt 80/13

(45) Bekanntmachung des Hinweises auf die Patenterteilung:
06.01.82 Patentblatt 82/1

(84) Benannte Vertragsstaaten:
CH DE FR GB IT

(56) Entgegenhaltungen:
**DE-A-886 734**
**DE-A-1 619 351**
**US-A-1 640 724**

(73) Patentinhaber: **BASF Aktiengesellschaft,
Carl-Bosch-Strasse 38, D-6700 Ludwigshafen (DE)**

(72) Erfinder: **Hoch, Helmut, Dr., Dipl.-Chem.,
Waldstrasse 53 C, D-6706 Wachenheim (DE)**
Erfinder: **Hiller, Heinrich, Dr., Dipl.-Chem.,
Theodor-Heuss-Strasse 11, D-6706 Wachenheim (DE)**
Erfinder: **Urtel, Rolf, Dr., Dipl.-Chem., Kreuzstrasse 8,
D-6710 Frankenthal (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verfahren zur Herstellung von lasierenden Pigmentformen des Indanthrons und des chlorierten Indanthrons

Die Erfindung betrifft ein Verfahren zur Herstellung von lasierenden Pigmentformen des Indanthrons und des chlorierten Indanthrons, die brillante und farbstarke Färbungen liefern.

Zur Herstellung von Indanthronpigmenten sind in der Patentliteratur viele Verfahren beschrieben. Aus dieser Literatur sind auch einige Einflüsse von Reaktionsparametern auf die Form und/oder den Farbton des Pigments bekannt.

Indanthron existiert in mehreren im Kristallaufbau verschiedenen Modifikationen, von denen nur die α-Modifikation coloristisches Interesse hat. Von dieser Modifikation existieren wiederum Pigmentformen, die rotstichige oder grünstichigere Blaufärbungen liefern.

Die grünstichigblaue Pigmentform, die im Color Index unter der Nr. 69 800 beschrieben ist, erhält man durch Fällen einer Lösung von Indanthron in Schwefelsäure. Die gleiche Pigmentform erhält man auch durch Quellen von Indanthron der γ-Modifikation in 73- bis 80gewichtsprozentiger Schwefelsäure und Austragen dieser Mischung auf Wasser.

Viele Verfahren zur Herstellung von Indanthronpigmenten gehen von der Leukoverbindung des Indanthrons aus. Letzteres ist ein Zwischenprodukt bei der technischen Synthese des Indanthrons durch Alkalischmelze von 2-Aminoanthrachinon (BIOS Final Report Nr. 987, Seiten 52 bis 55).

Im folgenden wird unter Leukoindanthron oder Leukoverbindung das Alkalimetallsalz des Leukoindanthrons, bzw. von dessen Chlorderivaten verstanden, unabhängig davon ob das Salz des Leukoindanthrons gelöst, in fester Form oder in Form einer Suspension vorliegt. Die durch Ansäuern erhältliche freie Leukoverbindung wird als »Küpensäure« bezeichnet.

Nach den Angaben der US-PS 1 640 724 erhält man durch Erhitzen der Leukoverbindung des Indanthrons und des chlorierten Indanthrons in Wasser in Gegenwart von Luft eine grüner färbende Pigmentform, die gleichzeitig klarere und reinere Färbungen liefert.

In der DE-OS 1 619 351 wird die Herstellung eines grünstichigen Indanthronpigments beschrieben, wobei die Leukoverbindung in Wasser in Gegenwart nichtionogener oberflächenaktiver Mittel, in der Wärme mit Luft oxidiert wird.

Ein ähnliches Verfahren ist in der DE-PS 1 644 478 beschrieben, bei dem jedoch Teilchen von 1 bis 2 μm erhalten werden.

Nach den Angaben in der US-PS 2 091 102, Seite 2, Zeilen 32 bis 46, entstehen bei der Oxidation von Leukoindanthron in alkalischer Lösung mit Luft sowohl in der Wärme wie auch bei Raumtemperatur stets Indanthronpigmente, die grünstichige Blaufärbungen liefern.

Im Gegensatz dazu erhält man nach der US-PS 2 091 102 ein wesentlich rotstichigere Färbungen lieferndes Indanthronpigment, das feinteilig ist und ein hohes Deckvermögen aufweist, wenn man die Leukoverbindung in einer wäßrigen Suspension mit einem Mittel oxidiert, das wirksamer als Luftsauerstoff ist. Solche Mittel sind z. B. m-nitrobenzolsulfonsaures Natrium.

Nach den Angaben in der US-PS 1 150 863 erhält man ein rotstichiges Indanthronpigment, wenn man das Leukoindanthron in Wasser und in Gegenwart von Alkali sehr langsam oxidiert.

Ein weiteres Verfahren zur Herstellung eines rotstichige Blaufärbungen liefernden Indanthronpigments wird in der US-PS 3 242 182 beschrieben. Bei diesem Verfahren wird in Schwefelsäure gelöstes Indanthron mit einer definierten Menge Salpetersäure, Mangandioxid oder Chromtrioxid behandelt, das Reaktionsgemisch in eine reduzierend wirkende wäßrige Lösung ausgetragen und das Pigment in üblicher Weise isoliert. Als reduzierend wirkende Mittel werden Alkalimetallsulfite und Eisen(II)-sulfat genannt.

Aus der DE-PS 294 830 ist bekannt, daß bei der Oxidation von Leukoindanthron in Lösungen, welche die Leukoverbindung teilweise oder praktisch vollständig in fester kristalliner Form suspendiert enthalten, bei der Oxidation — sowohl in der Wärme als auch bei Raumtemperatur — nur grobe Indanthronkristalle entstehen. Nach den Angaben der DE-PS 294 830 entsteht nur dann ein feinteiliges als Pigment brauchbares Indanthron, wenn man zuerst aus dem Salz der Leukoverbindung die freie Leukoverbindung — die Küpensäure — ausfällt und diese mit Luft oxidiert.

Nach den Angaben der US-PS 2 032 458 ist es zur Herstellung von farbstarkem Indanthronpigmenten erforderlich, daß die Leukoverbindung oxidiert wird, bevor eine wesentliche Ausfällung der festen Leukoverbindung eingetreten ist. Andernfalls erhält man farbschwache und trübe Pigmente, da die Oxidation der festen Teilchen unvollständig ist.

So erhält man nach den Angaben der US-PS 2 893 994 coloristisch wertvolle Küpenpigmente, wenn die wäßrige alkalische Lösung der Leukoverbindung in feine Tröpfchen zerteilt und diese mit einem flüssigen oxidierend wirkenden Medium, z. B. eine Lösung des Natriumsalzes der m-Nitrobenzolsulfonsäure, zusammengebracht wird. Dabei wird das Pigment in feinteiliger Form ausgefällt. Nach den Angaben in Spalte 4, Zeilen 15 bis 22, liefern nicht gelöste und/oder ausgefallene Leukoverbindungen bei diesem Verfahren nicht die vorteilhafte Pigmentform, weshalb Anteile an fester Leukoverbindung in der zu versprühenden Lösung vermieden werden müssen.

Aus der US-PS 2 982 666 ist bekannt, daß man sehr farbstarke und leicht verteilbare, feinteilige Pigmente erhält, wenn man ein Gemisch aus einem trockenen organischen Rohpigment und einem organischen Formierungsmittel in Form einer zähen Masse benetzt und knetet, vorteilhafterweise zusammen mit einem wasserlöslichen Mahlhilfsmittel wie Salz. Dabei wird das Rohpigment durch Scherkräfte zerkleinert. Die Knetmasse wird mit Hilfe von Wasser zerlegt und das Pigment isoliert. Als Rohpigmente werden Phthalocyanine, ferner Küpenpigmente wie Indanthron, halogeniertes Indanthron und andere genannt.

Als Formierungsmittel kommen bei diesem Verfahren Polyole, deren Äther, Ester und/oder deren chlorierte Derivate in Betracht.

Nach der US-PS 2 402 167 erhält man Pigmentformen durch Mahlen der Rohpigmente mit mindestens der vierfachen Menge an Salz.

Aus der FR-PS 1 438 075 ist bekannt, daß man wertvolle Pigmentformen, z. B. des chlorierten Indanthrons erhält, wenn man zu der wäßrigen Suspension des Filterkuchens des feinteiligen Rohpigments in Abwesenheit von Säure ein Alkalimetall- oder Ammoniumsalz einer gesättigten oder ungesättigten Mono- oder Dicarbonsäure mit 8 bis 25 C-Atomen bei pH 8 gibt, das Gemisch mehrere Stunden rührt und dann das Pigment abtrennt. Das feinteilige Rohpigment in Form des Filterkuchens kann z. B. durch Umlösen aus Säure und Entfernen der verdünnten Säure oder bei säureempfindlichen Rohpigmenten durch Mahlen mit wasserfreiem Calciumchlorid und Herauslösen des Salzes mit Wasser erhalten werden.

Aufgabe der vorliegenden Erfindung war es, ein Verfahren aufzufinden, nach dem Indanthronpigmente erhalten werden, die im Vollton lasierende Färbungen liefern und die im Weißverschnitt hohe Farbstärke aufweisen.

Es wurde gefunden, daß man lasierende Pigmentformen des Indanthrons und des chlorierten Indanthrons durch Oxidation der entsprechenden Leukoverbindungen mit Luft in wäßrig alkalischer Suspension in Gegenwart von Dithionit und 0,2 bis 20 Gewichtsprozent, bezogen auf die Leukoverbindung, oberflächenaktiver Mittel erhält, wenn die Oxidation unter gleichzeitiger Einwirkung von Scherkräften bei Temperaturen zwischen 20 und 100° C erfolgt.

Nach dem erfindungsgemäßen Verfahren erhält man Indanthronpigmente und Chlorindanthronpigmente, die im Vollton brillante und lasierende Färbungen und im Weißverschnitt farbstarke und klare Färbungen liefern. In diesen Eigenschaften sind die Verfahrensprodukte den Indanthronpigmenten des Standes der Technik deutlich überlegen.

Das Ergebnis war überraschend, da nach den Angaben in der DE-PS 294 830 und den US-PS 2 032 458 und 2 893 994 die Oxidation von Suspensionen des Leukoindanthrons, insbesondere die Oxidation mit Luft, keine coloristisch brauchbaren Pigmente liefern soll.

Das Verfahren gemäß der Erfindung wird im allgemeinen so durchgeführt, daß man die Leukoverbindung des Indanthrons oder des chlorierten Indanthrons in einer Suspension, die Dithionit und 0,2 bis 20, vorzugsweise 2 bis 15 Gewichtsprozent oberflächenaktive Mittel enthält, unter Einwirkung von Scherkräften oxidiert.

Die Suspension der Leukoverbindung kann durch Suspendieren der Leukoverbindung hergestellt werden, die vorher durch Verküpen von Indanthron und/oder chlorierten Indanthron und Isolieren der Leukoverbindung erhalten worden ist. Dieses Verfahren empfiehlt sich vor allem dann, wenn eine Reinigung des Indanthrons erwünscht oder erforderlich ist, da beim Abtrennen der Leukoverbindung in der Küpe lösliche Verunreinigungen mit dem Filtrat entfernt werden. Gegebenenfalls kann das Filtergut noch mit blinder Küpe gewaschen werden.

In diesem Fall wird die Leukoverbindung vorzugsweise in wäßriger Natronlauge, die 0,5 bis 50 Gew.-%, bezogen auf Leukoindanthron, an Natriumhydroxid enthält, suspendiert und der Suspension 1 bis 10, vorzugsweise 2 bis 6 Gewichtsprozent, bezogen auf Leukoverbindung, Alkalidithionit zugegeben. Nach der Zugabe des oder der oberflächenaktiven Mittel erfolgt dann die Oxidation unter der Einwirkung von Scherkräften.

Bei genügend reinem Indanthron und chloriertem Indanthron ist in der Regel eine Isolierung der Leukoverbindung nicht erforderlich. Die Suspension der Leukoverbindung wird in diesem Fall durch Zugabe — bezogen auf Farbstoff — von 10 bis 50 Gewichtsprozent Alkalihydroxyd, vorzugsweise Natriumhydroxid, und 10 bis 30 Gewichtsprozent Alkalidithionit, vorzugsweise Natriumdithionit, zu der wäßrigen Farbstoffsuspension erhalten. Die beim Verküpen des Indanthrons und/oder chlorierten Indanthrons entstehende Leukoverbindung wird dann in der Suspension direkt nach dem Zugeben des oder der oberflächenaktiven Mittel unter Einwirkung von Scherkräften wie oben angegeben oxidiert.

Man kann aber auch so verfahren, daß man das Indanthron und/oder das chlorierte Indanthron, vorzugsweise in Form des wäßrigen Preßkuchens und eine alkalische Dithionitlösung und das oberflächenaktive Mittel zusammengibt und das erhaltene Gemisch sofort nach dem Zusammengeben unter der Einwirkung von Scherkräften oxidiert.

In diesem Fall gibt man — bezogen auf Farbstoff (trocken) — 10 bis 50 Gewichtsprozent Alkalihydroxid und 10 bis 30 Gewichtsprozent Alkalidithionit und das oder die oberflächenaktiven Mittel zur wäßrigen Farbstoffsuspension und oxidiert wie oben angegeben.

Als Ausgangsstoffe kommen Indanthron und chloriertes Indanthron, das ein, zwei, drei oder vier Chloratome enthält, in Betracht. Bevorzugt sind Indanthron, Monochlor- und Dichlorindanthron.

Als oberflächenaktive Mittel kommen nichtionische, vorzugsweise kationische und anionische in Betracht. Die Menge an oberflächenaktiven Mitteln beträgt 0,2 bis 20, vorzugsweise 2 bis 15 Gewichtsprozent, bezogen auf die Leukoverbindung.

Als nichtionische oberflächenaktive Mittel sind z. B. zu nennen: $C_{12}$- bis $C_{20}$-Alkanole,

N-Hydroxy-$C_2$- bis $C_4$-alkylamide und N,N-Bis-(hydroxy-$C_2$- bis $C_4$-alkyl)-amide von $C_{16}$- bis $C_{20}$-Carbonsäuren, Anlagerungsprodukte von Äthylenoxid an $C_{12}$- bis $C_{20}$-Alkanole, an $C_{12}$- bis $C_{20}$-Carbonsäuren, an Amide, N-Hydroxy-$C_2$- bis $C_4$-alkylamide und N,N-Bis-(hydroxy-$C_2$- bis $C_4$-alkyl)amide von $C_{16}$- bis $C_{20}$-Carbonsäuren, an $C_{12}$- bis $C_{20}$-Alkylamine, an $C_8$- bis $C_{20}$-Alkylphenole, an Monoglyceride von Fettsäuren, wobei das Verhältnis Äthylenoxid zu oxalkylierter Verbindung im allgemeinen zwischen 1 : 1 und 30 : 1 Mol liegt.

Für das erfindungsgemäße Verfahren kommen als kationische oberflächenaktive Mittel z. B. in Betracht: quartäre Ammoniumverbindungen, wie Salze des $C_1$- bis $C_4$-Trialkylbenzylammoniums, des Di-$C_1$- bis $C_4$-alkyldibenzyl-ammoniums, des $C_{10}$- bis $C_{20}$-Alkyl-tri-$C_1$- bis $C_4$-alkylammoniums, quaternierte Trialkylammoniumpolyglykoläther, N-$C_{10}$- bis $C_{16}$-Alkylpyridiniumsalze und N-$C_{10}$- bis $C_{18}$-Imidazolinium-Salze in Form der Chloride, Sulfate, Methylsulfate, Toluol- oder Benzolsulfonate.

Als anionische oberflächenaktive Mittel sind z. B. zu nennen: $C_{13}$- bis $C_{18}$-Paraffinsulfonsäuren, $C_{13}$- bis $C_{18}$-Paraffindisulfonsäuren, Sulfobernsteinsäure-di-$C_1$- bis $C_8$-alkylester, sulfiertes Ölsäuredibutylamid, $C_8$- bis $C_{18}$-Alkylbenzolsulfonsäuren, wie Octyl-, Nonyl-, Decyl-, Tetradecyl-, Hexadecyl- oder Dodecylbenzolsulfonsäuren, Mono- und Di-$C_3$- bis $C_8$-alkyl-naphthalin-2-sulfosäure, Kondensationsprodukte aus Naphthalin-2-sulfonsäure und Formaldehyd, Kondensationsprodukte aus Phenolsulfonsäuren, Harnstoff und Formaldehyd, N-$C_{12}$- bis $C_{18}$-Alkyl-N-methylamino-essigsäuren, $C_{16}$- bis $C_{20}$-Fettsäuren, Abietinsäure, Kolophonium, hydriertes oder dimerisiertes Kolophonium oder Gemische davon in Form der Ammonium- oder Alkalimetallsalze.

Als oberflächenaktive Mittel sind $C_{16}$- bis $C_{20}$-Fettsäuren, Abietinsäure, Kolophonium, hydriertes und dimerisiertes Kolophonium, $C_{13}$- bis $C_{18}$-Paraffindisulfonsäuren, Sulfobernsteinsäure-di-$C_1$- bis $C_8$-alkylester und Dodecylbenzolsulfonsäure in Form der Ammonium- oder Alkalimetallsalze, $C_{10}$- bis $C_{20}$-Alkyl-tri($C_1$- bis $C_4$-alkyl)ammoniumsalze, quaternierte Trialkylammoniumpolyglykoläther und N-$C_{10}$- bis $C_{18}$-Alkylimidazoliniumsalze in Form der Chloride, Sulfate, Methylsulfate, Benzolsulfonate oder Toluolsulfonate, N-(Hydroxy-$C_2$- bis $C_4$-alkyl)amide von $C_{16}$- bis $C_{20}$-Carbonsäure, Anlagerungsprodukte von Äthylenoxid an $C_{12}$- bis $C_{20}$-Carbonsäuren oder Gemische dieser Mittel bevorzugt.

Die Oxidation erfolgt bei Temperaturen zwischen Raumtemperatur (20°C) und 100°C, vorzugsweise zwischen 30 und 80°C.

Als Oxidationsmittel kommt Luft in Betracht. Die Luft wird während der Einwirkung der Scherkräfte in die Mischung eingeleitet.

Die Scherkräfte werden in der wäßrigen Suspension durch Mahlkörper wie Glas-, Keramik-, Metall- oder Kunststoffkugeln oder Sand, welche durch schnellaufende Rührer bewegt werden, erzeugt. Geeignete Geräte sind z. B. Sand- oder Perlmühlen. Die Menge an Mahlkörpern liegt im allgemeinen zwischen der 10- und 40fachen Gewichtsmenge, bezogen auf Leukoverbindung oder Indanthron.

Die Wassermenge in der Suspension ist nicht kritisch, wenn diese vor, während und nach der Oxidation rührbar ist. In der Regel wird man die 5- bis 30fache, bezogen auf (Leuko-)Indanthron, vorzugsweise die 10- bis 20fache Menge an Wasser anwenden.

Die erhaltene Pigmentsuspension wird in üblicher Weise aufgearbeitet. Das Pigment kann durch Filtrieren, Zentrifugieren oder Dekantieren abgetrennt werden. Das Filtergut wird neutral gewaschen und kann getrocknet oder in Form des feuchten Filterkuchens weiterverarbeitet werden. Die Trocknung erfolgt zweckmäßigerweise unter vermindertem Druck bei 50 bis 80°C.

Die folgenden Beispiele sollen das Verfahren der vorliegenden Erfindung zusätzlich erläutern. Die im folgenden genannten Teile und Prozentangaben beziehen sich auf das Gewicht.

## Beispiel 1

100 Teile Leukoindanthron in Form des feuchten Preßkuchens werden in eine Mischung aus 850 Teilen Wasser, 40 Teile Natronlauge (50%ig), 8 Teilen Natriumdithionit und 8 Teilen Kolophoniumseife (Natrium-Salz) eingetragen. Die Suspension des Leukoindanthrons wird nach Zugabe von 1600 Teilen Glasperlen (Durchmesser: 08 bis 1 mm) mittels eines hochtourigen Rührers (2000 U/min) unter Luftzutritt 5 Stunden bei 25 bis 30°C gerührt. Anschließend wird von den Perlen abgesiebt. Zur Entfernung von anhaftendem Farbstoff werden die Glasperlen nochmals in 1000 Teilen Wasser suspendiert und die Suspension abgetrennt. Die vereinigten wäßrigen Suspensionen werden mit 10%iger Schwefelsäure auf pH 5 angesäuert, der Farbstoff durch Filtrieren abgetrennt und neutralgewaschen. Der Preßkuchen wird bei 70°C im Vakuum getrocknet. Das erhaltene Pigment läßt sich in Einbrennlacken gut verteilen. Im Vollton erhält man lasierende Blaufärbungen und im Weißverschnitt blauviolette Färbungen von hoher Farbstärke mit hervorragenden Echtheiten. 80 Gewichtsprozent der Teilchen haben eine Teilchengröße unterhalb von 0,5 μm.

## Beispiel 2

100 Teile Leukoindanthron in Form des feuchten Preßkuchens werden in eine Mischung aus 900 Teilen Wasser, 60 Teilen Natronlauge (50%ig), und 8 Teilen Natriumthionit, eingetragen. Die wäßrige Suspension des Leukoindanthrons wird nach der Zugabe von 1600 Teilen Glasperlen (Durchmesser 0,8 bis 1 mm) mittels eines hochtourigen Rührers (2000 U/min) zunächst unter Überleiten von Stickstoff zwei Stunden bei 25 bis 30°C gerührt (gemahlen). Dann werden 5 Teile Ölsäureäthanolamid zugegeben und es wird weitere 2 Stunden unter Luftzutritt bei 25 bis 30°C gemahlen.

Die Aufarbeitung erfolgt wie in Beispiel 1. Man erhält ein Blaupigment, das im Vollton noch lasierender als das Pigment des Beispiels 1 ist, bei praktisch gleicher Farbstärke im Weißverschnitt. 80% der Teilchen besitzen eine Teilchengröße unterhalb 0,4 µm. Die häufigste Teilchengröße liegt bei 0,22 µm.

### Beispiel 3

100 Teile Leukoindanthron in Form des feuchten Preßkuchens werden in eine Mischung aus 900 Teilen Wasser, 60 Teilen Natronlauge (50%ig) und 8 Teilen Natriumdithionit eingetragen. Zur Suspension werden 5 Teile Ölsäureäthanolamid gegeben und durch 30 Minuten Rühren unter Überleiten von Stickstoff homogen verteilt. Nach Zugabe von 1600 Teilen Glasperlen (Durchmesser 0,8 bis 1 mm) wird die Suspension auf 65°C erwärmt und mittels eines hochtourigen Rührers (2000 U/min) 4 Stunden unter Luftzutritt gemahlen. Die Aufarbeitung erfolgt wie in Beispiel 1. Man erhält ein Blaupigment, das im Einbrennlack im Verschnitt mit Titandioxid eine sehr farbstarke, grünstichigblaue Färbung mit hoher Brillanz und im Purton eine lasierende Färbung ergibt. 80% der Teilchen besitzen eine Teilchengröße unterhalb 0,4 µm. Die häufigste Teilchengröße liegt bei 0,23 µm.

### Beispiel 4

100 Teile Indanthron als feuchter Preßkuchen werden in eine Mischung von 900 Teilen Wasser, 40 Teilen Natronlauge (50%ig) und 20 Teilen Natriumdithionit eingetragen und zu einem Teig angerührt. Dann werden 1600 Teile Glasperlen (Durchmesser 0,8 bis 1 mm) und 10 Teile Natriumsalz der Dodecylbenzolsulfonsäure zugegeben und mittels eines hochtourigen Rührers (2000 U/min) 5 Stunden bei 25 bis 30°C unter Luftzutritt gemahlen.

Die Aufarbeitung folgt Beispiel 1. Man erhält ein Blaupigment, das in Einbrennlacken sehr gut dispergierbar ist. Das Pigment gibt im Vollton Färbungen mit hoher Lasur und im Weißverschnitt grünstichig-blaue Färbungen von hoher Farbstärke und Brillanz mit hervorragenden Echtheiten.

80% der Teilchen besitzen eine Teilchengröße unterhalb 0,4 µm. Die häufigste Teilchengröße liegt bei 0,24 µm.

### Beispiel 5

100 Teile Indanthron in Form des feuchten Preßkuchens werden mit 900 Teilen Wasser, in dem 40 Teile Natronlauge (50%ig) und 20 Teile Natriumdithionit gelöst sind, zu einem Teig angerührt. Dann werden 1600 Teile Glasperlen (Durchmesser 0,8 bis 1 mm) und 8 Teile Trimethyllaurylammoniumchlorid zugegeben und mittels eines hochtourigen Rührers (2000 U/min) 4 Stunden bei 25 bis 30°C unter Luftzutritt gemahlen.

Die Aufarbeitung folgt Beispiel 1. Man erhält ein Blaupigment, das sich in Einbrennlacken sehr gut verteilen läßt. Das Pigment gibt im Vollton Färbungen mit erhöhter Lasur, im Weißverschnitt Färbungen mit hoher Farbstärke, in grünstichig-blauem Farbton und hoher Brillanz. Die Teilchengrößenverteilung ist praktisch die gleiche wie bei den nach Beispiel 4 erhaltenen Pigmenten.

### Beispiel 6

100 Teile Leukoindanthron werden als feuchtes Preßgut in eine Lösung von 24 Teilen Natronlauge (50%ig) und 10 Teilen Natriumdithionit in 600 Teilen Wasser eingetragen. Nach Zugabe von ca. 1600 Teilen Glasperlen (Durchmesser 0,2 bis 1,0 mm) wird bei 2000 U/min unter Luftzutritt 4 Stunden bei 65°C gerührt. Dann werden 8 Teile Trimethyllaurylammoniumchlorid zugegeben und noch 1 Stunde bei 65°C nachgerührt.

Die Aufarbeitung erfolgt gemäß Beispiel 1. Das erhaltene Blaupigment gibt im Einbrennlack im Weißverschnitt mit Titandioxid Färbungen mit erhöhter Farbstärke mit grünstichig-blauen Farbton. Im Vollton erhält man lasierende Färbungen mit erhöhter Brillanz. Die Färbungen weisen ausgezeichnete Licht- und Wetterechtheiten auf. Die Teilchengrößen-Verteilung entspricht der des nach Beispiel 4 erhaltenen Pigments.

### Beispiel 7

100 Teile Dichlorindanthron als feuchter Preßkuchen werden mit 900 Teilen Wasser, in dem 40 Teile Natronlauge (50%ig) und 15 Teile Natriumdithionit gelöst sind, zu einem Teig angerührt. Dann werden 1600 Teile Glasperlen (Durchmesser 0,8 bis 1 mm) und 5 Teile Ölsäureäthanolamid zugegeben und mittels eines hochtourigen Rührers (2000 U/min) 4 Stunden bei 25 bis 30°C unter Luftzutritt gemahlen. Anschließend wird von den Perlen abgesiebt. Die Glasperlen werden zur Entfernung von anhaftendem Farbstoff nochmals in 1000 Teilen Wasser suspendiert und die Suspension abgetrennt. Die vereinigten wäßrige Suspensionen werden mit 10%iger Schwefelsäure auf pH 5 angesäuert, das Pigment durch Filtrieren isoliert und neutralgewaschen. Der Preßkuchen wird bei 70°C im Vakuum getrocknet. Das erhaltene Blaupigment läßt sich in Einbrennlacken gut verteilen und liefert im Vollton stark lasierende Blaufärbungen von hoher Brillanz bei grünerem Farbton als das Pigment des Beispiels 1. Im Weißverschnitt erhält man Färbungen mit hoher Farbstärke in grünstichig-blauem Farbton und erhöhter Brillanz. 80% der Teilchen besitzen Teilchengrößen unterhalb 0,5 µm.

## Beispiel 8

100 Teile Chlorindanthron als feuchter Preßkuchen werden mit 900 Teilen Wasser, in dem 40 Teile Natronlauge (50%ig) und 15 Teile Natriumdithionit gelöst sind, zu einem Teig angerührt. Dann werden 1600 Teile Glasperlen (Durchmesser 0,8 bis 1 mm) und 10 Teile Natriumsalz der Abietinsäure zugegeben und mittels eines hochtourigen Rührers (2000 U/min) 4 Stunden bei 25 bis 30°C unter Luftzutritt gemahlen.

Die Aufarbeitung folgt Beispiel 7. Das erhaltene Blaupigment läßt sich in Einbrennlacken gut verteilen und liefert stark lasierende Volltonausfärbungen. Im Weißverschnitt erhält man Färbungen von hoher Farbstärke. Die Färbungen sind im Vergleich zu denen des Pigments aus Beispiel 7 stärker grünstichigblau, bei erhöhter Brillanz.

## Patentanspruch

Verfahren zur Herstellung von lasierenden Pigmentformen des Indanthrons und des chlorierten Indanthrons, durch Oxidation der entsprechenden Leukoverbindungen in wäßrig alkalischer Suspension in Gegenwart von Dithionit und 0,2 bis 20 Gewichtsprozent, bezogen auf die Leukoverbindung, oberflächenaktiver Mittel mit Luft, dadurch gekennzeichnet, daß die Oxidation unter gleichzeitiger Einwirkung von Scherkräften bei Temperaturen zwischen 20 und 100°C erfolgt.

## Claim

A process for the production of transparent pigmentary forms of indanthrone and of chlorinated indanthrone by oxidation, with air, of the appropriate leuco coumpounds in aqueous alkaline suspension in the presence of dithionite and 0.2 to 20% by weight, based on the leuco compound, of a surfactant, characterized in that the oxidatiton is carried out under the simultaneous action of shearing forces at temperatures of from 20 to 100°C.

## Revendication

Procédé pour la préparation de formes pigmentaires à aspect glacé de l'indanthrone et de l'indanthrone chlorée, par oxydation des leucocomposés correspondants en suspension alcaline aqueuse en présence de dithionite et de 0,2 à 20% en poids, par rapport au leucocomposé, d'agents tensio-actifs avec l'air, caractérisé en ce que l'oxydation est effectuée à des températures comprises entre 20 et 100°C, avec action simultanée de forces de cisaillement.